Europäisches Patentamt

European Patent Office

Office européen des brevets

(19)

(11) Veröffentlichungsnummer: **0 1 1 7 426**
**B1**

(12) ## EUROPÄISCHE PATENTSCHRIFT

(45) Veröffentlichungstag der Patentschrift:
30.04.86

(21) Anmeldenummer: 84100724.8

(22) Anmeldetag: 24.01.84

(51) Int. Cl.⁴: **H 04 N 7/13**

(54) Anordnung zur Ableitung von Video-Taktfrequenzen aus einer in der PCM-Hierarchie auftretenden PCM-Taktfrequenz.

(30) Priorität: 31.01.83 DE 3303149

(43) Veröffentlichungstag der Anmeldung:
05.09.84 Patentblatt 84/36

(45) Bekanntmachung des Hinweises auf die Patenterteilung:
30.04.86 Patentblatt 86/18

(84) Benannte Vertragsstaaten:
AT BE CH DE FR GB IT LI NL SE

(56) Entgegenhaltungen:
EP - A - 0 063 639

(73) Patentinhaber: Siemens Aktiengesellschaft, Berlin und München Wittelsbacherplatz 2, D-8000 München 2 (DE)

(72) Erfinder: Starck, Alexander, Dipl.-Phys.,
Terhallestrasse 45, D-8000 München 90 (DE)

**Beschreibung**

Die Erfindung beziet sich auf eine Anordnung zur Ableitung von Video-Taktfrequenzen aus einer in der PCM(Puls-Code-Modulation)-Hierarchie auftretenden PCM-Taktfrequenz.

In einem digitalen Breitband-Kommunikationsnetz kann die Übertragung synchron erfolgen, d.h. alle Teilnehmer senden und empfangen mit derselben Taktfrequenz. Diese kann von der Taktfrequenz einer auf dem 24- oder 30-Kanal-System basierenden PCM-Hierarchiestufe, wie 2,048 MHz oder 34,468 MHz abgeleitet sein.

Bei der Abtastung von Videosignalen hat es Vorteile, wenn die Luminanzabtastfrequenz ein Vielfaches der Zeilenfrequenz beträgt; also orthogonal abgetastet wird. Jede Bildzeile wird dann mit einer bestimmten Anzahl von Binärzeichen übertragen. Die Video-Datenrate kann durch Einblenden von Zusatzbits derart erhöht werden, daß sich eine aus der PCM-Hierarchie ableitbare Frequenz ergibt.

In der DE 31 16 422 A1 ist ein digitales Breitband-Kommunikationssystem beschrieben, bei dem sämtliche Kameras und Monitore synchron arbeiten. Die Zeilenfrequenz weicht dabei um bis zu $2 \cdot 10^{-4}$ von der Standard-Zeilenfrequenz ab, so daß eine Datenrate zustande kommt, die sich in das PCM-Netz einfügen läßt. Fernsehprogramme aus externen Quellen werden mit Zeilensynchronisiereinrichtungen an die Systemzeilenfrequenz angepaßt. Dabei kann es im ungünstigsten Fall etwa alle 5 Minuten zu einem Ruck im Bild kommen, was bei bestimmten Bildvorlagen sehr stört.

Aufgabe der Erfindung ist es, Video-Taktfrequenzen in einfacher Weise und ohne die genannten Bildstörungen abzuleiten.

Ausgehend von einer Anordnung der einleitend geschilderten Art wird diese Aufgabe erfindungsgemäß dadurch gelöst, daß ein spannungsgesteuerter Oszillator vorgesehen ist, der die Luminanzabtastfrequenz abgibt, daß ein Phasenvergleicher vorgesehen ist, dessen erster Eingang über einen ersten und einen zweiten Frequenzteiler mit dem Ausgang des spannungsgesteuerten Oszillators, dessen zweiter Eingang über einen dritten Frequenzteiler mit einem Eingang für die PCM-Taktfrequenz und dessen Ausgang über einen Tiefpaß mit dem Steuereingang des spannungsgesteuerten Oszillators verbunden ist, daß ferner ein erster Zähler vorgesehen ist, dessen Eingang mit dem Eingang des ersten Frequenzteilers verbunden ist, dessen Ausgang die Horizontalfrequenz abgibt und dessen Rücksetzeingang mit einem Eingang für das decodierte Bildsynchronwort verbunden ist, und daß ein zweiter Zähler vorgesehen ist, dessen Eingang mit dem Ausgang des ersten Zählers verbunden ist' dessen Ausgang die Bildfrequenz abgibt und dessen Rücksetzeingang mit dem Eingang für das decodierte Bildsynchronwort verbunden ist.

Auf diese Weise kann aus der PCM-Taktfrequenz eine Zeilenfrequenz abgeleitet werden, die den Standardwert mit sehr kleinen Toleranzen aufweist. Die extern empfangenen Programme müssen zwar auch hier mit Hilfe von Zeilensynchronisiereinrichtungen angepaßt werden, der Ruck im Bild erfolgt aber derart selten, daß er in Programmpausen geleggt werden kann.

Eine erste Variante der erfindungsgemäßen Anordnung ist derart bemessen, daß ein spannungsgesteuerter Oszillator für 13,5 MHz vorgesehen ist, daß ein erster Frequenzteiler vorgesehen ist, der 4 kHz abgibt, daß ein zweiter Frequenzteiler vorgesehen ist, der 0,5 MHz abgibt, daß ein dritter Frequenzteiler vorgesehen ist, der 4 kHz abgibt, daß ein erster Zähler vorgesehen ist, der 15,625 kHz abgibt, und daß ein zweiter Zähler vorgesehen ist, der 25 Hz abgibt.

Eine zweite Variante der erfindungsgemäßen Anordnung ist derart bemessen, daß ein spannungsgesteuerter Oszillator vorgesehen ist, der 11,25 MHz abgibt, daß ein erster Frequenzteiler vorgesehen ist, der 2 kHz abgibt, daß ein zweiter Frequenzteiler vorgesehen ist, der 0,25 MHz abgibt, daß ein dritter Frequenzteiler vorgesehen ist, der 2 kHz abgibt, daß ein erster Zähler vorgesehen ist, der 15,625 kHz abgibt, und daß ein zweiter Zähler vorgesehen ist, der 25 Hz abgibt.

Eine dritte Variante der erfindungsgemäßen Anordnung ist derart bemessen, daß ein spannungsgesteuerter Oszillator für 10,125 MHz vorgesehen ist, daß ein erster Frequenzteiler vorgesehen ist, der 1 kHz abgibt, daß ein zweiter Frequenzteiler vorgesehen ist, der 0,125 MHz abgibt, daß ein dritter Frequenzteiler vorgesehen ist, der 1 kHz abgibt, daß ein erster Zähler vorgesehen ist, der 15,525 kHz abgibt und, daß ein zweiter Zähler vorgesehen ist, der 25 Hz abgibt.

Eine vierte Variantg der erfindungsgemäßen Anordnung ist derart bemessen, daß ein spannungsgesteuerter Oszillator für 9 MHz vorgesehen ist, daß ein erster Frequenzteiler vorgesehen ist, der 8 kHz abgibt, daß ein zweiter Frequenzteiler vorgesehen ist, der 1 MHz abgibt, daß ein dritter Frequenzteiler vorgesehen ist, der 8 kHz abgibt, daß ein erster Zähler vorgesehen ist, der 15,625 kHz abgibt, und daß ein zweiter Zähler vorgesehen ist, der 25 Hz abgibt.

Die Chrominanzabtastfrequenz kann mit einem Frequenzteiler aus der Luminanzabtastfrequenz gewonnen werden.

Anhand eines Ausführungsbeispieles wird die Erfindung nachstehend näher erläutert.

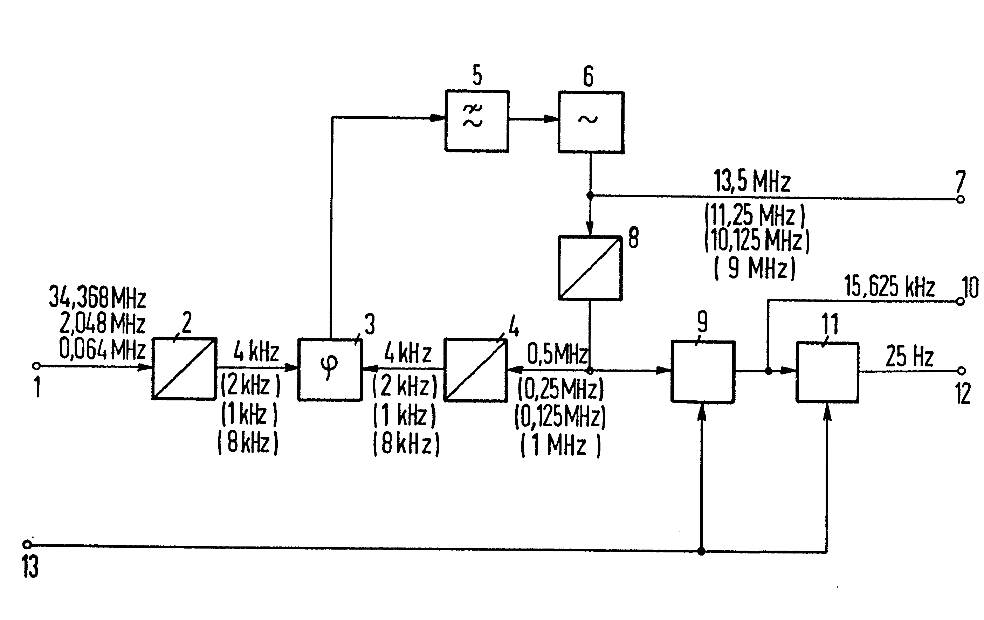

Figur 1 zeigt eine erfindungsgemäße Anordnung. Diese enthält einen spannungsgesteuerten Oszillator 6, Frequenzteiler 2, 4 und 8, einen Phasenvergleicher 3, einen Tiefpaß 5 sowie Zähler 9 und 11. Ein Eingang 1 dient der Aufnahme einer PCM-Taktfrequenz und ein Eingang 13 dient der Zuführung eines decodierten Bidsynchronworts. An einem Ausgang 7 kann die Luminanzabtastfrequenz, an einem Ausgang 10 die Horizontalfrequenz und an einem Ausgang 12 die Bildfrequenz abgenommen werden.

An den Eingang 1 kann wahlweise eine PCM-Taktfrequenz von 34,368 MHz, 2,048 MHz oder 0,064 MHz angelegt werden. Teilt der Frequenzteiler 2 entsprechend durch 8592, 512 oder 16, so gibt er 4 kHz ab. Der spannungsgesteuerte Oszillator 6 gibt 13,5 MHz ab. Teilt der Frequenzteiler 8 diese Frequenz durch 27, so entsteht eine Frequenz von 0,5 MHz, die im Frequenzteiler 4 durch 125 geteilt wird, so daß er ebenfalls 4 kHz abgibt. Der Phasenvergleicher 3 vergleicht die beiden 4-kHz-Frequenzen und gibt über den Tiefpaß 5 ein Steuersignal an den spannungsgesteuerten Oszillator 6 ab. Im Zähler 9 wird die 0,5-MHz-Frequenz durch das decodierte Bildsynchronwort am Eingang 13 gestartet durch 32 geteilt, so daß am Ausgang 10 eine Frequenz von 15,625 kHz liegt. Im zweiten Zähler 11 wird diese Frequenz ebenfalls durch das decodierte Bildsynchronwort gestartet durch 625 geteilt, so daß am Ausgang 12 die Bildfrequenz von 25 Hz abgenommen werden kann.

Bei weiteren Varianten werden die in Klammern stehenden Frequenzen gebildet.

## Patentansprüche

1. Anordnung zur Ableitung von Video-Taktfrequenzen aus einer in der PCM-Hierarchie auftretenden PCM-Taktfrequenz, dadurch gekennzeichnet, daß ein spannungsgesteuerter Oszillator (6) vorgesehen ist, der die Luminanzabtastfrequenz abgibt, daß ein Phasenvergleicher (3) vorgesehen ist, dessen erster Eingang über einen ersten (4) und einen zweiten (8) Frequenzteiler mit dem Ausgang des spannungsgesteuerten Oszillators (6), dessen zweiter Eingang über einen dritten Frequenzteiler (2) mit einem Eingang (1) für die PCM-Taktfrequenz und dessen Ausgang über einen Tiefpaß (5) mit dem Steuereingang des spannungsgesteuerten Oszillators (6) verbunden ist, daß ein erster Zähler (9) vorgesehen ist, dessen Eingang mit dem Eingang des ersten Frequenzteilers (4) verbunden ist, dessen Ausgang (10) die Horizontalfrequenz abgibs und dessen Rücksetzeingang mit einem Eingang (13) für das decodierte Bildsynchronwort verbunden ist, und daß ein zweiter Zähler (11) vorgesehen ist, dessen Eingang mit dem Ausgang des ersten Zählers (9) verbunden ist, dessen Ausgang (12) die Bildfrequenz abgibt und dessen Rücksetzeingang mit dem Eingang (13) für das decodierte Bildsynchronwort verbunden ist.

2. Anordnung nach Anspruch 1, dadurch gekennzeichnet, daß der spannungsgesteuerter Oszillator (6) 13,5 MHz abgibt daß der erster Frequenzteiler (4) 4 kHz abgibt. daß der zweiter Frequenzteiler (8) 0,5 MHz abgibt,

daß der dritter Frequenzteiler (2) 4 kHz abgibt, daß der erster Zähler (9) 15,625 kHz abgibt und daß der zweiter Zähler (11) 25 Hz abgibt.

3. Anordnung nach Anspruch 1, dadurch gekennzeichnet, daß der spannungsgesteuerter Oszillator (6) 11,25 MHz abgibt, daß der erster Frequenzteiler (4) 2 kHz abgibt, daß der zweiter Frequenzteiler (8) 0,25 MHz abgibt, daß der dritter Frequenzteiler (2) 2 kHz abgibt, daß der erster Zähler (9) 15,625 kHz abgibt und daß der.zweiter Zähler (11) 25 Hz abgibt.

4. Anordnung nach Anspruch 1, dadurch gekennzeichnet, daß der spannungsgesteuerter Oszillator (6) 10,125 MHz abgibt, daß der erster Frequenzteiler (4) 1 kHz abgibt, daß der zweiter Frequenzteiler (8) 0,125 MHz abgibt, daß der dritter Frequenzteiler (2) 1 kHz abgibt, daß der erster Zähler (9) 15,625 kHz abgibt und daß der zweiter Zähler (11) 25 Hz abgibt.

5. Anordnung nach Anspruch 1, dadurch gekennzeichnet, daß der spannungsgesteuerter Oszillator (6) 9 MHz abgibt, daß der erster Frequenzteiler (4) 8 kHz abgibt, daß der zweiter Frequenzteiler (8) 1 MHz abgibt, daß der dritter Frequenzteiler (2) 8 kHz abgibt, daß der erster Zähler (9) 15,625 kHz abgibt und daß der zweiter Zähler (11) 25 Hz abgibt.

## Claims:

1. An arrangement for deriving video clock frequencies from a PCM clock frequency which occurs in the PCM hierarchy, characterised in that a voltage controlled oscillator (6) is provided which emits the luminance scanning frequency, that a phase comparator (3) is provided whose first input is connected via a first (4) and a second (8) frequency divider to the output of the voltage controlled oscillator (6), whose second input is connected via a third frequency divider (2) to an input (1) for the PCM clock frequency, and whose output is connected via a low-pass filter (5) to the control input of the voltage controlled oscillator (6), that a first counter (9) is provided whose input is connected to the input of the first frequency divider (4), whose output (10) emits the horizontal frequency, and whose reset input is connected to an input (13) for the decoded picture synchronising word, and that a second counter (11) is provided whose input is connected to the output of the first counter (9), whose output (12) emits the picture frequency and whose reset input is connected to the input (13) for the decoded picture synchronising word.

2. An arrangement as claimed in claim 1, characterised in that the voltage controlled oscillator (6) emits 13.5 MHz,
that the first frequency divider (4) emits 4 kHz,
that the second frequency divider (8) emits 0.5 MHz,
that the third frequency divider (2) emits 4 kHz,
that the first counter (9) emits 15.625 kHz and
that the second counter (11) emits 25 Hz.

3. An arrangement as claimed in claim 1, characterised in that
the voltage controlled oscillator (6) emits 11.25 MHz,
that the first frequency divider (4) emits 2 kHz,
that the second frequency divider (8) emits 0.25 MHz,
that the third frequency divider (2) emits 2 kHz,
that the first counter (9) emits 15.625 kHz and
that the second counter (11) emits 25 Hz.

4. An arrangement as claimed in claim 1, characterised in that
the voltage controlled oscillator (6) emits 10.125 MHz,
that the first frequency divider (4) emits 1 kHz,
that the second frequency divider (8) emits 0.125 MHz,
that the third frequency divider (2) emits 1 kHz,
that the first counter (9) emits 15.625 kHz and
that the second counter (11) emits 25 Hz.

5. An arrangement as claimed in claim 1, characterised in that
the voltage controlled oscillator (6) emits 9 MHz,
that the first frequency divider (4) emits 8 kHz,
that the second frequency divider (8) emits 1 MHz,
that the third frequency divider (2) emits 8 kHz,
that the first counter (9) emits 15.625 kHz and
that the second counter (11) emits 25 Hz.

**Revendications.**

1. Dispositif pour dériver des fréquences d'horloge vidéo d'une fréquence d'horloge PCM se produisant dans la hiérarchie PCM, caractérisé en ce qu'il comprend:
un oscillateur (6) commandé par la tension, qui délivre la fréquence d'échantillonnage de luminance;
un comparateur de phase (3) dont la première entrée est réliée à travers un premier (4) et un second (8) diviseur de fréquence à la sortie de l'oscillateur(6) commandé par la tension, dont la seconde entrée est reliée à travers un troisième diviseur de fréquence (2) a une entrée (1) pour la fréquence d'horloge PCM et dont la sortie est reliée à travers un filtre passe-bas (5) à l'entrée de commande de l'oscillateur (6) commandé par la tension;
un premier compteur (9) dont l'entrée est reliée à l'entrée du premier diviseur de fréquence (4), dont la sortie (10) délivre la fréquence de trame et dont l'entrée de remise à zéro est reliée à une entrée (13) pour le mot décodé de synchronisation d'image; et

un second compteur (11) dont l'entrée est reliée à la sortie du premier compteur (9), dont la sortie (12) délivre la fréquence d'image et dont l'entrée de remise è zéro est reliée à l'entrée (13) pour le mot décodé de synchronisation d'image.

2. Dispositif selon la revendication 1, caractérisé
en ce que l'oscillateur (6)commandé par la tension délivre 13,5 MHz, le premier diviseur de fréquence (4) délivre 4 kHz, le second diviseur de fréquence (8) délivre 0,5 MHz, le troisième diviseur de fréquence (2) delivre 4 kHz, le premier compteur (9) délivre 15,625 kHz et le second compteur (11) délivre 25 Hz.

3. Dispositif selon la revendication 1, caractérisé en ce que l'oscillateur (6) commandé par tension délivre 11,25 MHz, le premier diviseur de fréquence (4) délivre 2 kHz, le second diviseur de fréquence (8) délivre 0,25 MHz, le troisième diviseur de fréquence (2) délivre 2 kHz, le premier compteur (9) délivre 15,625 kHz et le second compteur (11) délivre 25 Hz.

4. Dispositif selon la revendication 1, caractérisé en ce que l'oscillateur (6) commandé par la tension délivre 10,125 MHz, le premier diviseur de fréquence (4) délivre 1 kHz, le déuxième diviseur de fréquence (8) délivre 0,125 MHz, le troisième diviseur de fréquence (2) delivre 1 kHz, le premier compteur (9) délivre 15,625 kHz et le second compteur (11) délivre 25 Hz.

5. Dispositif selon la revendication 1, caractérisé en ce que l'oscillateur (6) commandé par la tension délivre 9 MHz, le premier diviseur de fréquence (4) délivre 8 kHz, le deuxième diviseur de fréquence (8) délivre 1 MHz, le troisième diviseur de fréquence (2) délivre 8 kHz, le premier compteur (9) délivre 15,625 kHz et le second compteur (11) délivre 25 Hz.

0 117 426